# EUROPEAN PATENT APPLICATION

(11) **EP 4 578 900 A1**
(43) Date of publication of application: **02.07.2025**
(21) Application number: 23857191.3
(22) Date of filing: 08.08.2023
(51) Int. Cl.: C08J 9/04, C08J 9/12

(54) **FLUORORESIN COMPOSITION AND FINE FOAM FLUORORESIN FILM USING SAME**

(30) Priority: 26.08.2022 JP 2022135178
(71) Applicant: FURUKAWA ELECTRIC CO., LTD., Tokyo 100-8322 (JP)
(72) Inventor: OKITA, Yutaka, Tokyo 100-8322 (JP); KOKUBO, Yosuke, Tokyo 100-8322 (JP)
(74) Representative: Forstmeyer, Dietmar
(86) International application number: PCT/JP2023/028920
(87) International publication number: WO 2024/043078

(57) **Abstract**

A fluorinated resin composition, containing (A) and (B) below, wherein a contained amount of the (B) is 10 mass% or more:
(A) a fluorinated resin containing a tetrafluoroethylene component and a component other than the tetrafluoroethylene component as a constituent, and having a largest calorific value in the fluorinated resin composition; and
(B) a fluorinated resin having a calorific value smaller than the calorific value of the fluorinated resin of the (A).

## Description

### FIELD OF THE INVENTION

The present invention relates to a fluorinated resin composition and a microcellular foamed fluorinated resin film using the same.

### BACKGROUND OF THE INVENTION

The sterilization effect of ultraviolet rays has been studied for a long time. As a light source of ultraviolet rays, a low-pressure mercury lamp, a xenon lamp, or the like has been the mainstream so far, but in recent years, an LED capable of emitting light having a wavelength in this ultraviolet region has been developed, and a sterilization equipment equipped with an LED or a sterilization method using an LED has been developed. For example, Patent Literature 1 describes a fluid sterilization module that irradiates a fluid flowing through a flow channel with ultraviolet rays to sterilize the fluid. In order to efficiently diffuse ultraviolet rays emitted from the light source to a certain region, it is effective to use a reflective material capable of reflecting ultraviolet rays efficiently and evenly. In the fluid sterilization module described in Patent Literature 1, an ultraviolet reflective material is used for an inner cylinder forming a cylindrical treatment-flow-path.

As an ultraviolet reflective material, a metal material, a resin material, and the like are known. As this metal material, for example, an aluminum foil for ultraviolet reflective materials that exhibits high reflectance for ultraviolet rays by controlling aluminum particles (Patent Literature 2), an aluminum reflective member having a reflective layer and a UV transmissive resin layer on the surface of an aluminum material, and the like are known (Patent Literature 3). As the resin material, a resin material in which fluororesins or silicone-based resins are formed into a multilayer laminate is known, and for example, a multilayer optical film having two fluoropolymer materials having different refractive indexes, and an ultraviolet reflective polymer film having two different polymer layers are known (Patent Literatures 4 and 5). In addition, a sintered and compressed or porous molded body made of polytetrafluoroethylene (PTFE) is also known as an ultraviolet reflective material.

A fluorinated resin exhibits very low deterioration due to ultraviolet rays, and forming the fluorinated resin into a foam film form internally having air bubbles and holes of a desired size enables reflecting ultraviolet rays, and thus, the fluorinated resin is promising as an ultraviolet reflective material in the sterilization field (Patent Literature 6). In order to more efficiently reflect ultraviolet rays having a wavelength range used in sterilization, it is necessary to control the size of the internal air bubbles or holes to a micro scale. For example, when a reflective film for reflecting ultraviolet rays referred to as UV-C (Ultraviolet C: deep ultraviolet rays) having a wavelength of 200 to 280 nm is achieved with a foam film, it is necessary to control the size of the air bubbles or holes to be approximately 1 µm. Recently, the variation of wavelengths of sterilization ultraviolet rays has increased, and reflective materials that can more efficiently reflect ultraviolet rays having a wavelength of 200 nm or a short wavelength close to 200 nm have been desired.

As a resin foaming technique, it has been known to foam a thermoplastic resin by impregnating it with a gas, such as a carbon dioxide gas, under increased pressure, subsequently reducing the pressure to bring it back to a normal pressure, and furthermore, heating it to a softening temperature of a resin or more. However, when the resin is a fluorinated resin, due to its high crystallization speed and crystallinity, the gas escapes from the inside of the resin before the process reaches the heat foaming process after the depressurization, and therefore, there is a problem that controlling to obtain a target microcellular foamed state is difficult.

As a foaming technique of a fluorinated resin, Patent Literature 7 describes that a non-foam molded body of a resin material including a crystalline fluorinated resin is foamed after being impregnated with carbon dioxide. However, this method impregnates the crystalline fluorinated resin with carbon dioxide in a supercritical state, which requires a special pressure vessel, and therefore, industrial mass-production is difficult. Patent Literature 8 describes a technique relating to a foam fluorinated resin material used as a coating layer of an insulated electric wire. Specifically, there is described an insulated electric wire having a foam insulation layer formed on a conductor surface directly or via a fusing layer, and the foam insulation layer is configured of a material obtained by mixing an amorphous fluorinated resin having a glass transition point of 80 to 300°C in a copolymer of tetrafluoroethylene and hexafluoropropylene or a copolymer of tetrafluoroethylene and perfluoroalkyl vinyl ether. However, the technique described in Patent Literature 8 has a practical problem from the viewpoint of global warming as the foam insulation layer is formed by being foamed from a molten state using fluorocarbons having a high affinity for a fluorinated resin. In addition, this method fails to obtain a microcellular foamed layer that reflects UV-C.

### CITATION LIST

### PATENT LITERATURES

Patent Literature 1: JP-A-2019-187657 ("JP-A" means unexamined published Japanese patent application)
Patent Literature 2: WO 2017/158989
Patent Literature 3: JP-A-2016-042183
Patent Literature 4: JP-T-7-507152 ("JP-T" means published searched patent publication)
Patent Literature 5: JP-A-2015-165298
Patent Literature 6: WO 2022/064991
Patent Literature 7: JP-A-2015-34255
Patent Literature 8: JP-A-5-47221

### SUMMARY OF THE INVENTION

### TECHNICAL PROBLEM

An objective of the present invention is to provide a fluorinated resin composition that can contain microfine air bubbles inside the resin composition by impregnation with a gas followed by foaming operation. An objective of the present invention in one aspect is to provide a fluorinated resin composition that can form a microcellular foamed fluorinated resin film that highly efficiently reflects UV-C by impregnation with a gas followed by foaming operation. An objective of the present invention is to provide a microcellular foamed fluorinated resin film that is obtainable by impregnation with a gas followed by foaming operation, and, for example, highly efficiently reflects UV-C.

### SOLUTION TO PROBLEM

In the present invention, the above problems were solved by the following means:
[1] A fluorinated resin composition, containing (A) and (B) below,
   wherein a contained amount of the (B) is 10 mass% or more:
   (A) a fluorinated resin containing a tetrafluoroethylene component and a component other than the tetrafluoroethylene component as a constituent, and having a largest calorific value in the fluorinated resin composition; and
   (B) a fluorinated resin having a calorific value smaller than the calorific value of the fluorinated resin of the (A).
[2] The fluorinated resin composition described in the above [1], wherein the (A) and (B) are both completely fluorinated resins, or the (A) and (B) are both partially fluorinated resins.
[3] The fluorinated resin composition described in the above [1] or [2], wherein a sum of a transmittance and a total reflectance with respect to ultraviolet rays having a wavelength of 200 to 280 nm is 60% or more.
[4] A microcellular foamed fluorinated resin film made by foaming the fluorinated resin composition described in any one of the above [1] to [3].
[5] The microcellular foamed fluorinated resin film described in the above [4], wherein an average bubble diameter is 1 µm or less.
[6] The microcellular foamed fluorinated resin film described in the above [4] or [5], wherein a total reflectance with respect to ultraviolet rays having a wavelength of 200 to 280 nm is 85% or more.
[7] The microcellular foamed fluorinated resin film described in any one of the above [4] to [6], wherein a foaming ratio is 1.05 to 2.00.
[8] The microcellular foamed fluorinated resin film described in any one of the above [4] to [7], which is a deep ultraviolet reflective film.

In the present invention, "ultraviolet rays" refers to an electromagnetic wave having a wavelength shorter than that of visible light. Note that "ultraviolet rays having a wavelength of 200 to 280 nm" in the present invention is ultraviolet rays included in deep ultraviolet rays.

In the present invention, the "total reflectance" means the sum of a "regularly reflectance" (specular reflectance) and a "diffuse reflectance". The "regularly reflectance" means a proportion of regularly reflected irradiation light to irradiation light, and the "diffuse reflectance" means a proportion of diffusely reflected irradiation light to irradiation light.

### ADVANTAGEOUS EFFECTS OF INVENTION

The fluorinated resin composition of the present invention can contain microfine air bubbles inside the composition by impregnation with a gas followed by foaming operation. Accordingly, for example, a microcellular foamed fluorinated resin film that highly efficiently reflects UV-C is formable. The microcellular foamed fluorinated resin film of the present invention is obtainable by employing a fluorinated resin composition in which specific kinds of fluorinated resins are combined as a raw material and impregnating this composition with a gas followed by performing foaming operation on this composition. The microcellular foamed fluorinated resin film of the present invention can, for example, highly efficiently reflect UV-C.

### BRIEF DESCRIPTION OF DRAWINGS

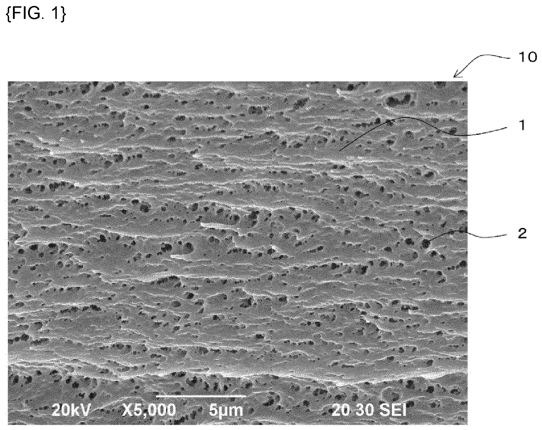

{FIG. 1} FIG. 1 is a photograph substituted for a drawing of a cross-sectional surface of a microcellular foamed fluorinated resin film produced in Example 2, and the cross-sectional surface has been obtained by freeze-fracturing the film in a high vacuum and captured by a scanning electron microscope.

### DESCRIPTION OF EMBODIMENTS

Preferable embodiments of a fluorinated resin composition and a microcellular foamed fluorinated resin film of the present invention will be described.

### [Fluorinated resin composition]

A fluorinated resin composition of the present invention (hereinafter also referred to as a "composition of the present invention") contains at least two kinds or more of fluorinated resins. The fluorinated resin may be a completely fluorinated (perfluoro) resin or may be a partially fluorinated resin. The completely fluorinated resin means a resin in which all hydrogen atoms in molecules are replaced with fluorine atoms. Examples of such a completely fluorinated resin include polytetrafluoroethylene (PTFE), tetrafluoroethylene-perfluoroalkylvinylether copolymer (PFA), and tetrafluoroethylene-hexafluoropropylene copolymer (FEP). The partially fluorinated resin means a resin in which a part of hydrogen atoms in molecules are replaced with fluorine atoms or a copolymer of a fluorinated resin and a hydrocarbon-based monomer. Examples of such a partially fluorinated resin include polyvinyl fluoride (PVF), polyvinylidene fluoride (PVDF), polychlorotrifluoroethylene (PCTFE), ethylene-tetrafluoroethylene copolymer (ETFE), ethylene-chlorotrifluoroethylene copolymer (ECTFE), tetrafluoroethylene-perfluoroalkylvinylether-chlorotrifluoroethylene copolymer (CPT), ethylene-tetrafluoroethylene-hexafluoropropylene copolymer (EFEP), and tetrafluoroethylene-hexafluoropropylene-vinylidene fluoride terpolymer (THV).

Various kinds of additives, for examples, a heat-resistant stabilizer, an organic lubricant, organic or inorganic particulates, an antistatic agent, a surfactant, and an antioxidant may be added to these fluorinated resins within a range that does not impair the effects of the present invention.

The composition of the present invention contains fluorinated resins of (A) and (B) below. Each of the fluorinated resins contained in the composition is classified into any one of (A) and (B) below based on its calorific value.
(A) A fluorinated resin containing a tetrafluoroethylene component and a component other than the tetrafluoroethylene component as a constituent, and having a largest calorific value in the fluorinated resin composition.
(B) A fluorinated resin having a calorific value smaller than the calorific value of the fluorinated resin of the (A).

The calorific value (crystal fusion heat) (J/g) of the fluorinated resin is measurable by a generally used method for a crystalline resin. For example, differential scanning calorimetry (DSC) is used to obtain an integral value calculated from a DSC curve and a baseline, and thus, the calorific value (in the present invention, the "calorific value" is an absolute value of a value (negative value) calculated by the DSC) is determinable. Note that, when the calorific values of the respective fluorinated resins to be used are compared, the respective calorific values that have been obtained under unified measuring conditions, such as a cooling speed, are compared.

When a fluorinated resin of a commercial product is used, the calorific value written in the product information of the commercial product can also be used as a calorific value of the fluorinated resin.

The (A) is a copolymer containing a tetrafluoroethylene component and a component other than the tetrafluoroethylene component. Examples of the copolymer containing the tetrafluoroethylene component and the component other than the tetrafluoroethylene component include PFA, FEP, ETFE, CPT, EFEP, and THV. The (A) is a fluorinated resin that has the largest calorific value in the fluorinated resins contained in the composition of the present invention. Therefore, the (A) is usually one kind of fluorinated resin in the composition of the present invention.

The (B) is a fluorinated resin other than the fluorinated resin corresponding to the (A) in the fluorinated resins contained in the composition of the present invention. Since the (A) is the fluorinated resin with the largest calorific value, the calorific value of the fluorinated resin corresponding to the (B) is smaller than the calorific value of the fluorinated resin corresponding to the (A). Note that the fluorinated resin corresponding to the (A) in the composition of the present invention is usually one kind.

When the composition of the present invention contains three kinds or more of fluorinated resins, fluorinated resins other than the fluorinated resin corresponding to the (A) all correspond to the (B). That is, the (B) may be one kind of fluorinated resin or may be two kinds or more of fluorinated resins. For example, when the composition of the present invention contains two kinds of fluorinated resins with calorific values different from one another, the fluorinated resin corresponding to the (B) is one kind, and when the composition of the present invention contains three kinds or more of fluorinated resins with calorific values different from one another, the fluorinated resins corresponding to the (B) are two kinds or more.

A difference between the calorific value of the fluorinated resin corresponding to the (A) and the lowest calorific value among the calorific values of the fluorinated resins corresponding to the (B) is preferably 5 J/g or more, more preferably 10 J/g or more, and further preferably 15 J/g or more. Note that the upper-limit value of the difference between the calorific value of the fluorinated resin corresponding to the (A) and the highest calorific value among the calorific values of the fluorinated resins corresponding to the (B) is not particularly limited, and the difference is usually 40 J/g or less, may be 30 J/g or less, or may be 20 J/g or less.

The contained amount of the (B) in the composition of the present invention is 10 mass% or more. From the aspect of bringing the foaming ratio and the average bubble diameter in the film within a desired range when a microcellular foamed fluorinated resin film is produced using the composition of the present invention, the contained amount is preferably 15 mass% or more. The contained amount is allowed to be 90 mass% or less, may be 70 mass% or less, is preferably 50 mass% or less, is more preferably 40 mass% or less, and is further preferably 30 mass% or less.

Note that, when a plurality of the fluorinated resins correspond to the (B), the "contained amount of the (B)" means a total contained amount of the plurality of fluorinated resins corresponding to the (B).

The contained amount of the (A) in the composition of the present invention may be 10 mass% or more, may be 30 mass% or more, is preferably 50 mass% or more, is more preferably 60 mass% or more, and is further preferably 70 mass% or more. The contained amount is 90 mass% or less and preferably 85 mass% or less.

From the aspect of compatibility in the (A) and (B), it is preferred that the fluorinated resins corresponding to (A) and (B) are both completely fluorinated resins or the fluorinated resins corresponding to (A) and (B) are both partially fluorinated resins.

The composition of the present invention preferably has a sum of a transmittance and a total reflectance of 60% or more, more preferably 65% or more, and further preferably 70% or more in a state where the composition is molded into a film form with a thickness of 500 µm and has not undergone a foaming process.

In the present specification, the total reflectance and transmittance for deep ultraviolet rays having a wavelength of 200 to 280 nm each mean an average value of total reflectances and transmittance at respective wavelengths (in 1 nm units) in the wavelength region of deep ultraviolet rays having a wavelength of 200 to 280 nm. The total reflectance and transmittance for deep ultraviolet rays can be measured by a method described in Examples mentioned later.

The composition of the present invention is applicable to usage of, for example, a reflective film for deep ultraviolet rays, a foam insulated film of a printed substrate or the like, an ultraviolet protective film, an antenna housing, and a radio wave permeable body.

Note that the composition of the present invention is preferably applied to usage other than forming an insulating coating layer of an insulated electric wire (not used for forming an insulating coating layer of an insulated electric wire).

### [Microcellular foamed fluorinated resin film]

The microcellular foamed fluorinated resin film of the present invention (hereinafter also referred to as a "film of the present invention") is a film that is made by microcellular foaming the composition. In the film of the present invention, air bubbles generated by microcellular foaming are scattered in the composition.

The composition of the present invention can reduce the crystallization speed as the whole composition and maintain low crystallinity by containing two kinds or more of fluorinated resins with different calorific values, and therefore, desorption of a gas with which the fluorinated resin has been impregnated is reduceable. Molding the composition into a film form and performing the foaming process on the composition causes the fluorinated resin of the (B) uniformly dispersed in the fluorinated resin of the (A) to act as a satisfactory bubble nucleating agent to accelerate the generation speed of air bubbles, and thus, many air bubbles can be generated before the desorption of a carbon dioxide gas.

FIG. 1 is a scanning electron micrograph of a cross-sectional surface obtained by cutting off one embodiment of the film of the present invention in a thickness direction. A fluorinated resin film (10) illustrated in FIG. 1 is a film made of a fluorinated resin composition (1) and internally has air bubbles (2) in approximately circular shapes in plan view.

Note that the film of the present invention is not at all limited to the form of FIG. 1 except for those specified in the present invention.

The shapes of the air bubbles are not particularly limited, and are appropriately designed within a range that does not impair the effects of the present invention. For example, the shape may be a circular shape, an approximately circular shape, or an elliptical shape in plan view of the film cross-sectional surface, or the shape may be an elongated elliptical shape that has acute angles at both ends obatined by making approximately circular arcs face one another. In the present invention or the present specification, a "bubble diameter" means a distance (the largest diameter) in which a straight line distance connecting one point to another point on the circumference of one air bubble (a boundary line between the air bubble and the resin) in plan view of the film cross-sectional surface becomes the maximum. An "average bubble diameter" means an average value of the bubble diameters measured for 50 random air bubbles. Note that the above-described average bubble diameter can be determined, for example, by a method described in Examples.

The film of the present invention is able to have a configuration in which the gas with which the fluorinated resin is impreganted can be microcellular foamed by uniformly dispersing the (B) in the fluorinated resin of the (A) and the generated microfine air bubbles are contained. The average bubble diameter of the air bubbles is preferably 1 µm or less, more preferably 0.8 µm or less, further preferably 0.5 µm or less, and further preferably 0.4 µm or less. The average bubble diameter of the air bubbles is usually, 0.01 µm or more, also preferably 0.05 µm or more, and also preferrably 0.06 µm or more. Note that the air bubble may be a closed cell or may be an open cell.

In the film of the present invention, the foaming ratio is preferably 1.05 or more, and more preferably 1.10 or more. The foaming ratio is allowed to be 2.00 or less, and taking microcellular foaming into account, it is preferably 1.60 or less, more preferably 1.50 or less, also preferably 1.30 or less, and also preferably 1.25 or less. In the present invention or the present specification, the foaming ratio means a proportion of a density (P) of the resin composition itself that constitutes the film to a density (bulk density, Q) of the film (the film having the air bubbles) (P/Q). Note that the units of the density P and the density Q are the same. The density (bulk density) of the film of the present invention is measurable by, for example, an immersion method (JIS K 7112: 1999).

The film of the present invention is allowed to have a film thickness appropriately set corresponding to the purpose. For example, the film thickness may be 50 µm or more, may be 100 µm or more, or may be 300 µm or more. The film thickness may be 1000 µm or less, may be 800 µm or less, or may be 600 µm or less. Note that the film thickness is a film thickness after the foaming process. For example, when the film thickness varies before and after the foaming process due to the high foaming ratio, the film thickness of the resin film that undergoes the foaming process can be appropriately set such that the film thickness after the foaming process falls within the preferable range described above.

For example, when the film of the present invention is used as a reflective film for deep ultraviolet rays, from the aspect of reflection efficiency of deep ultraviolet rays, the film thickness is preferably 100 µm or more, more preferably 200 µm or more, and further preferably 400 µm or more. From the aspect of workability of the reflective film, the film thickness is preferably 1000 µm or less, more preferably 800 µm or less, and further preferably 600 µm or less.

When the film thickness is 500 µm, the film of the present invention preferably has a total reflectance with respect to deep ultraviolet rays with 200 to 280 nm of 50% or more, more preferably 60% or more, more preferably 70% or more, more preferably 80% or more, further preferably 85% or more, and further preferably 90% or more. The film of the present invention is also excellent in total reflectance with respect to deep ultraviolet rays, in particular, at a short wavelength side, for example, with 200 to 220 nm.

The film of the present invention excellent in reflective performance with respect to deep ultraviolet rays with 200 to 280 nm can efficiently reflect deep ultraviolet rays emitted from a light source by being used as, for example, a reflective film for a deep ultraviolet light source. Therefore, it is possible to fully and effectively utilize deep ultraviolet rays by reflecting light deviating from an irradiation target for deep ultraviolet light emitted from, for example, a mercury lamp, a metal halide lamp, a barrier discharge lamp, or a deep ultraviolet LED. A unit made by combining such a light source and a reflective film is preferably usable in a water sterilizer, a space sterilizer, a device for sterilizing a surface of a medical product, a household item, or a substance such as various kinds of processed products and food products, and the like.

The film of the present invention prevents deep ultraviolet rays from being transmitted by highly reflecting the deep ultraviolet rays, and therefore is also usable as, for example, a shielding film for protecting one that is exposed to the deep ultraviolet rays.

The film of the present invention having microfine air bubbles in the film is excellent in dielectric property, and therefore is preferably usable for an antenna housing, an insulation coating film, a radio wave transmission film, and the like.

### [Method for producing film of present invention]

A method for producing the film of the present invention will be described below.

The film of the present invention illustrated in FIG. 1 is a film in which microfine air bubbles are internally formed by molding the composition of the present invention into a film form, thereafter impreganting the composition of the present invention with a carbon dioxide gas, and furthermore heating the composition of the present invention. Using the composition of the present invention as a resin material constituting a film enables effectively reducing the desorption of the gas before foaming, and the (B) acts as a satisfactory bubble nucleating agent to accelerate the generation speed of air bubbles, and therefore, the inside of the film can be microcellular foamed. One examle of a method for obtaining such a film in which a large number of microfine air bubbles are formed will be described.

The producing method exemplarily described here has a gas sealing process that impregnates a film made of the composition of the present invention with a gas (an inert gas, such as a carbon dioxide gas, nitrogen, and a noble gas) under high pressure and a heat foaming process that heats the film after pressure release to generate air bubbles inside the resin.

In the gas sealing process, the film made of the resin composition of the present invention is exposed to the gas for preferably 1 to 100 hours, and more preferably 2 to 48 hours under a pressure condition of preferably 1 to 20 MPa, and more preferably 3 to 10 MPa to seal the gas in the resin film. For example, an autoclave, a pressure vessel, or the like is preferably usable for this gas sealing process.

In the heat foaming process, the film after the gas sealing process is heated for preferably 0.1 to 3 minutes, and more preferably 0.5 to 2 minutes under a temperature condition of preferably 120 to 300°C, and more preferably 150 to 250°C. Undergoing this process allows obtaining a reflective film having desired microfine air bubbles or holes inside the resin film.

When the gas is sealed in the resin film made of a fluorinated resin of a single component under high pressure, the gas escapes from the inside of the resin before the process reaches the heat foaming process after depressurization due to the high crystallization speed and crystallinity of the fluorinated resin, and thus, controlling to obtain the target microcellular foamed state is difficult. In particular, in a producing site of a fluorinated resin film on a large scale not on a laboratory scale, it is sometimes difficult to shorten the period from the depressurization to the heat foaming process. Because the gas desorption from the inside of the resin is fast, gas density variations are likely to occur in the resin film immediately before the heat foaming process, which may cause the occurrence of reflectance variations of deep ultraviolet rays within a surface of the resin film obtained by the subsequent heat foaming.

In contrast to this, the composition of the present invention is a composition containing fluorinated resins with different calorific values, and therefore, compared with a composition made of a fluorinated resin of a single composition, the crystallization speed as the whole composition can be reduced, and low crystallinity can be mainatined. Therefore, a target microcellular foamed fluorinated resin film is obtainable without quickly performing the heat foaming process on the film after the gas sealing process. For example, the period it takes from the depressurization to the heat foaming process may be 1 to 240 minutes, may be 5 to 120 minutes, or may be 10 to 60 minutes. Since the composition of the present invention has low crystallinity maintained as described above, it is considered that the variations in gas density in the resin film immediately before the heat foaming process are reduceable, and thus, the variations in reflectance of deep ultraviolet rays within the surface of the resin film are reduceable.

### EXAMPLES

Hereinafter, the present invention will be described more in detail with reference to Examples, but the present invention is not limited thereto.

### <Producing method>

### [Example 1]

80 mass parts of NEOFLON (manufactured by DAIKIN INDUSTRIES, LTD., product name: NEOFLON FEP NP-40, MFR: 1) and 20 mass parts of A-PFA (manufactured by Chemours-Mitsui Fluoroproducts Co., Ltd., amorphous PFA 959HP-Plus) were added and mixed in a twin-screw extruder (Φ 25 mm), and a compound (mixture) was obtained. Thereafter, the compund was added in a single-screw extruder (Φ 20 mm) to prepare a fluorinated resin composition, the fluorinated resin composition was molded to have a thickness of 500 µm and a width of 300 mm, and a resin film (hereinafter also referred to as a "pre-foaming process film") was obtained. Next, an olefin-based nonwoven fabric (manufactured by Japan Vilene Company, Ltd.: FT300 grade) with a thickness of 160 µm, a width of 290 mm, and a basis weight of 55 g/m² were prepared as a separator, the resin film and the nonwoven fabric were stacked and rolled, and a roll A was obtained.

Thereafter, the above-described roll A was put in a pressure vessel, the inside of the pressure vessel was pressurized to 5.2 MPa with a carbon dioxide gas, and the resin film was impregnated with the carbon dioxide gas for 24 hours.

Next, the roll A was taken out from the pressure vessel, the resin film impregnated with the carbon dioxide gas was continuously supplied to a hot air circulation type foaming furnace set to 210°C while the separater was removed such that a dwell period in the foaming furnace became one minute, and the resin film was foamed. Note that the period after the roll A was taken out from the pressure vessel until the resin film was heated to 210°C was approximately 30 minutes. The resin film after heating was used as a resin film of Example 1 (hereinafter also referred to as a "post-foaming process film").

Note that the film thickness of Example 1 described above (the resin film after heating) was measured using a micrometer (product name: Coolant Proof Micrometer, model number: MDC-25MX, manufactured by Mitutoyo Corporation), and the film thickness was substantially the same before and after the foaming process. The same applies to Examples and Comparative Examples below.

### [Examples 2 to 8]

Respective resin films (pre-foaming process films and post-foaming process films) of Examples 2 to 8 were obtained similarly to Example 1 except that the blending composition of the fluorinated resin compositions was as shown in Table 1 below. Detailed information of fluorinated resins are described below.

### -Fluorinated resin-

- FEP-1: NEOFLON FEP NP-40, MFR=1, manufactured by DAIKIN INDUSTRIES, LTD., tetrafluoroethylene-hexafluoropropylene copolymer
- FEP-2: NEOFLON FEP NP-30, MFR=3, manufactured by DAIKIN INDUSTRIES, LTD., tetrafluoroethylene-hexafluoropropylene copolymer
- A-PFA: Amorphous PFA 959HP-Plus, MFR=2, manufactured by Chemours-Mitsui Fluoroproducts Co., Ltd., tetrafluoroethylene-perfluoroalkylvinylether copolymer
- ETFE-1: NEOFLON ETFE EP-521, MFR=11-13, manufactured by DAIKIN INDUSTRIES, LTD., ethylene-tetrafluoroethylene copolymer
- ETFE-2: NEOFLON ETFE EP-620, MFR=12-18, manufactured by DAIKIN INDUSTRIES, LTD., ethylene-tetrafluoroethylene copolymer
- PFA-1: NEOFLON PFA AP-230, MFR=2, manufactured by DAIKIN INDUSTRIES, LTD., tetrafluoroethylene-perfluoroalkylvinylether copolymer

Note that the calorific values (J/g) of the respective fluorinated resins are calorific values (absolute values) measured when the heating temperature is set to 10°C/minute using differential scanning calorimetry (DSC-60A, manufactured by SHIMADZU CORPORATION).

### [Comparative Examples 1 to 3]

A resin film (pre-foaming process film) with a thickness of 500 µm made of a fluorinated resin shown in Table 1 below was stacked and rolled with a separator in a similar method to that of Example 1 to make a roll, the roll was impregnated with a carbon dioxide gas under a condition of 5.2 MPa in a pressure vessel for 24 hours, after the resin film was supplied to a hot air circulation type foaming furnace similarly to the above, the film thickness was measured similarly to the above, and resin films (post-foaming process films) of Comparative Examples 1 to 3 were obtained. Note that the period after the resin film was taken out from an autoclave until it was heated to 210°C was the same as that in Example 1.

Average bubble diameters, foaming ratios, deep ultraviolet light transmittances, and deep ultraviolet ray reflectances were evaluated as follows using the respective films of Examples 1 to 8 and Comparative Examples 1 to 3 described above. The obtained results are collectively shown in Table 1 below.

### <Evaluation method>

### [Average bubble diameter]

The average bubble diameters in the films (post-foaming process films) of Examples 1 to 8 were obtained by freeze-fracturing the respective films in a high vacuum, observing cross-sectional surfaces of the films with a scanning electron microscope (model number: JSM-6390LV, manufactured by JEOL Ltd.), randomly measuring the largest diameters of 50 air bubbles from obtained data, and calculating average values. The obtained values of the average bubble diameter are shown in Table 1.

### [Foaming ratio]

Densities (P) of the pre-foaming process films and densities (Q) of the post-foaming process films of Examples 1 to 8 and Comparative Examples 1 to 3 above were each meausured by the immersion method (JIS K 7112: 1999). Foaming ratios (P/Q) were calculated from the obtained densities (P) and (Q). The results are shown in Table 1 below.

### [Deep ultraviolet ray total reflectance]

A Φ60 standard integrating sphere was mounted on a spectrophotometer (product name: U-4100, manufactured by Hitachi High-Tech Corporation), and the total reflectances of the respective films (pre-foaming process films and post-foaming process films) when the value of the total reflectance of a Spectralon reflectance standard (manufactured by Labsphere, white, model number: USRS-99-010) was 100% were measured over a deep ultraviolet region having a wavelength of 200 to 280 nm. A reflectance for each 1 nm of wavelength was read from an obtained chart (measurement results), and an arithmetic mean of the total reflectances (81 measurement values (%)) in the above-described deep ultraviolet region was obtained to use it as a "deep ultraviolet ray total reflectance." The results of the deep ultraviolet ray total reflectances of the respective post-foaming process films of Examples 1 to 8 and Comparative Examples 1 to 3 are shown in Table 1 below.

### [Deep ultraviolet light transmittance]

A Φ60 standard integrating sphere was mounted on a spectrophotometer (product name: U-4100, manufactured by Hitachi High-Tech Corporation), the pre-foaming process films in Examples 1 to 8 and Comparative Examples 1 to 3 were irradiated from the front with light beams of respective wavelengths, and the proportions of the amounts of the light beams captured by a detector when the irradiation light beam amount was 100% were used as transmittances (%). A transmittance for each 1 nm of wavelength was measured over a deep ultraviolet region having a wavelength of 200 to 280 nm, and an arithmetic mean of 81 measurement values was obtained to use it as a "deep ultraviolet light transmittance."

**[Table 1]**

| | Ex. 1 | Ex. 2 | Ex. 3 | Ex. 4 | Ex. 5 | Ex. 6 | Ex. 7 | Ex. 8 | CEx. 1 | CEx. 2 | CEx. 3 |
|---|---|---|---|---|---|---|---|---|---|---|---|
| FEP-1 (calorific value: 21.96 J/g) | 90 | 80 | 70 | 60 | 50 | - | - | 70 | 100 | - | - |
| ETFE-1 (calorific value: 44.71 J/g) | - | - | - | - | - | 80 | - | - | - | 100 | - |
| PFA (calorific value: 26.15 J/g) | - | - | - | - | - | - | 80 | - | - | - | 100 |
| A-PFA (calorific value: 6.19 J/g) | 10 | 20 | 30 | 40 | 50 | - | 20 | 20 | - | - | - |
| ETFE-2 (calorific value: 33.54 J/g) | - | - | - | - | - | 20 | - | - | - | - | - |
| FEP-2 (calorific value: 19.57 J/g) | - | - | - | - | - | - | - | 10 | - | - | - |
| Average bubble diameter (µm) | 0.285 | 0.292 | 0.306 | 0.269 | 0.295 | 0.330 | 0.082 | 0.250 | - | - | - |
| Foaming ratio | 1.10 | 1.11 | 1.15 | 1.17 | 1.27 | 1.52 | 1.08 | 1.18 | 1.00 | 1.00 | 1.00 |
| Pre-foaming process film (deep ultraviolet light transmittance) + (ultraviolet ray total reflectance) (%) | 61.5 | 67.3 | 70.3 | 71.2 | 69.1 | 60.6 | 73.8 | 82.2 | 63.5 | 60.1 | 71.1 |
| Post-foaming process film | 93.0 | 97.2 | 96.4 | 95.1 | 86.0 | 85.0 | 92.2 | 94.5 | 40.1 | 25.8 | 30.2 |
| Deep ultraviolet ray total reflectance (%) | | | | | | | | | | | |

| | | | | | | | | | | | |
|---|---|---|---|---|---|---|---|---|---|---|---|
| Remarks: 'Ex.' means Example according to this invention, and 'CEx.' means Comparative Example. | | | | | | | | | | | |

The fluorinated resin films that used one kind of fluorinated resin failed to form sufficient amounts of desired microfine air bubbles in the films even though the foaming process was performed impregnating the films with the carbon dioxide gas, and the deep ultraviolet ray total reflectances of the post-foaming process films were all below 50% (Comparative Examples 1 to 3).

In contrast to this, the fluorinated resin films that used the plurality of fluorinated resins with different calorific values were able to form desired microfine air bubbles in the films by performing the foaming process impregnating the films with the carbon dioxide gas, and therefore, the foaming ratios were obviously enhanced by the foaming process. Since these resins had high total values of transmittances and total reflectances of deep ultraviolet rays having a wavelength of 200 to 280 nm before the foaming process, low absorptances of the deep ultraviolet rays were maintained, and furthermore, after the foaming process, all the deep ultraviolet ray total reflectances presented high reflectances of 85% or more (Examples 1 to 8).

Having described our invention as related to this embodiments and Examples, it is our intention that the invention not be limited by any of the details of the description, unless otherwise specified, but rather be construed broadly within its spirit and scope as set out in the accompanying claims.

The present application claims priority of Patent Application No. 2022-135178, filed in Japan on August 26, 2022, which is herein incorporated by reference as part of the present specification.

### DESCRIPTION OF SYMBOLS

- 10: Fluorinated resin film
- 1: Fluorinated resin composition
- 2: Air bubble

## Claims

1. A fluorinated resin composition, comprising (A) and (B) below, wherein a contained amount of the (B) is 10 mass% or more:
(A) a fluorinated resin containing a tetrafluoroethylene component and a component other than the tetrafluoroethylene component as a constituent, and having a largest calorific value in the fluorinated resin composition; and
(B) a fluorinated resin having a calorific value smaller than the calorific value of the fluorinated resin of the (A).

2. The fluorinated resin composition according to Claim 1, wherein the (A) and (B) are both completely fluorinated resins, or the (A) and (B) are both partially fluorinated resins.

3. The fluorinated resin composition according to Claim 1 or 2, wherein a sum of a transmittance and a total reflectance with respect to ultraviolet rays having a wavelength of 200 to 280 nm is 60% or more.

4. A microcellular foamed fluorinated resin film made by foaming the fluorinated resin composition accoriding to any one of Claims 1 to 3.

5. The microcellular foamed fluorinated resin film according to Claim 4, wherein an average bubble diameter is 1 µm or less.

6. The microcellular foamed fluorinated resin film according to Claim 4 or 5, wherein a total reflectance with respect to ultraviolet rays having a wavelength of 200 to 280 nm is 85% or more.

7. The microcellular foamed fluorinated resin film accoriding to any one of Claims 4 to 6, wherein a foaming ratio is 1.05 to 2.00.

8. The microcellular foamed fluorinated resin film accoriding to any one of Claims 4 to 7, which is a deep ultraviolet reflective film.
